# EUROPEAN PATENT APPLICATION

(11) **EP 3 228 821 A1**
(43) Date of publication of application: **11.10.2017**
(21) Application number: 17159397.3
(22) Date of filing: 06.03.2017
(51) Int. Cl.: F01D 9/02, F01D 9/04, F01D 5/18, F01D 5/22, F01D 11/24

(54) **SYSTEM AND METHOD FOR COOLING TRAILING EDGE AND/OR LEADING EDGE OF HOT GAS FLOW PATH COMPONENT**

(30) Priority: 10.03.2016 US 201615066794
(71) Applicant: General Electric Company, Schenectady, NY 12345 (US)
(72) Inventor: LACY, Benjamin Paul, Greenville, SC 29615 (US); BENJAMIN, Marc Lionel, Greenville, SC 29615 (US); NGUYEN, San Jason, Greenville, SC 29615 (US)
(74) Representative: Illingworth-Law, William Illingworth

(57) **Abstract**

A hot gas flow path component (40) includes a body (42) including a leading edge (44), a trailing edge (46), a first side edge (48), a second side edge (50), and a pair of opposed lateral sides (52, 54). A first lateral side (52) is configured to interface with a cavity (56) having a cooling fluid. The hot gas flow path component (40) includes a supply channel (90) disposed within the body (42) and extending from the cavity (56) to adjacent the leading edge (44) or the trailing edge (46). The hot gas flow path component (40) includes a channel (74) disposed within the body (42) adjacent the trailing edge (44) or the leading edge (46). The channel (74) extends across the body (42) in a direction from the first side edge (48) toward the second side edge (50). The channel (74) is configured to receive the cooling fluid from the cavity (56) to cool the trailing edge (46) or the leading edge (44) via an intermediate channel (114) extending between the supply channel (90) and the channel (74).

## Description

### BACKGROUND

The subject matter disclosed herein relates to gas turbine engines, and more specifically, to turbine shrouds for gas turbine engines.

A turbomachine, such as a gas turbine engine, may include a compressor, a combustor, and a turbine. Gases are compressed in the compressor, combined with fuel, and then fed into to the combustor, where the gas/fuel mixture is combusted. The high temperature and high energy exhaust fluids are then fed to the turbine along a hot gas path, where the energy of the fluids is converted to mechanical energy. High temperatures along the hot gas path can heat turbine compoments (e.g., turbine shroud), causing degradation of components.

### BRIEF DESCRIPTION

Certain embodiments commensurate in scope with the originally claimed subject matter are summarized below. These embodiments are not intended to limit the scope of the claimed subject matter, but rather these embodiments are intended only to provide a brief summary of possible forms of the subject matter. Indeed, the subject matter may encompass a variety of forms that may be similar to or different from the embodiments set forth below.

In accordance with a first embodiment, a hot gas flow path component for use in a turbine section of a gas turbine engine is provided. The hot gas flow path component includes a body including a leading edge, a trailing edge, a first side edge, a second side, and a pair of opposed lateral sides between the leading and trailing edges and the first and second side edges. A first lateral side of the pair of opposed lateral sides is configured to interface with a cavity having a cooling fluid, and a second lateral side of the pair of opposed lateral sides is oriented toward a hot gas flow path. The hot gas flow path component also includes a first supply channel disposed within the body and extending in an axial direction relative to a longitudinal axis of the gas turbine engine from the cavity to the adjacent the leading edge or the trailing edge. The first supply channel is configured to receive the cooling fluid from the cavity. The hot gas flow path component further includes a first channel disposed within the body adjacent the second lateral side and adjacent the trailing edge or the leading edge. The first channel extends across the body in a direction from the first side edge toward the second side edge. The first channel includes a first end portion adjacent the first side edge and a second end portion adjacent the second side edge. The first channel is configured to receive the cooling fluid from the cavity to cool the trailing edge or the leading edge via a first intermediate channel extending in a radial direction relative to the longitudinal axis between the first supply channel and the first channel.

In accordance with a second embodiment, a shroud segment for use in a turbine section of a gas turbine engine is provided. The shroud segment includes a body including a leading edge, a trailing edge, a first side edge, a second side, and a pair of opposed lateral sides between the leading and trailing edges and the first and second side edges. A first lateral side of the pair of opposed lateral sides is configured to interface with a cavity having a cooling fluid, and a second lateral side of the pair of opposed lateral sides is oriented toward a hot gas flow path. The shroud segment also includes a first supply channel disposed within the body adjacent the first side edge and extending an axial direction relative to a longitudinal axis of the gas turbine engine from the cavity to adjacent the trailing edge. The shroud segment further includes a second supply channel disposed within the body adjacent the second side edge and extending in the axial direction from the cavity to adjacent the trailing edge. The first and second supply channels are configured to receive the cooling fluid from the cavity. The shroud segment still further includes a first channel disposed within the body adjacent the second lateral side and adjacent the trailing edge. The first channel extends across the body in a direction from the first side edge toward the second side edge. The first channel includes a first end portion adjacent the first side edge and a second end portion adjacent the second side edge. The first channel is configured to receive the cooling fluid from the cavity to cool the trailing edge via a first intermediate channel extending in a radial direction relative to the longitudinal axis between the first supply channel and the first channel. The first end portion of the second channel is directly coupled to the first intermediate channel. The shroud segment yet further includes a second channel disposed within the body adjacent the second lateral side and adjacent the trailing edge. The second channel extends across the body in the direction from the first side edge towards the second side edge. The second channel includes a third end portion adjacent the first side edge and a fourth end portion adjacent the second side edge. The second channel is configured to receive the cooling fluid from the cavity to cool the trailing edge via a second intermediate channel extending in the radial direction between the second supply channel and the second channel. The fourth end portion of the second channel is directly coupled to the second intermediate channel.

In accordance with a third embodiment, a shroud segment for use in a turbine section of a gas turbine engine is provided. The shroud segment includes a body including a leading edge, a trailing edge, a first side edge, a second side, and a pair of opposed lateral sides between the leading and trailing edges and the first and second side edges. A first lateral side of the pair of opposed lateral sides is configured to interface with a cavity having a cooling fluid, and a second lateral side of the pair of opposed lateral sides is oriented toward a hot gas flow path. The shroud segment also includes a first supply channel disposed within the body adjacent the first side edge and extending in an axial direction relative to a longitudinal axis of the gas turbine engine from the cavity to adjacent the leading edge. The shroud segment further includes a second supply channel disposed within the body adjacent the second side edge and extending in the axial direction from the cavity to adjacent the leading edge. The first and second supply channels are configured to receive the cooling fluid from the cavity. The shroud segment still further includes a first channel disposed within the body adjacent the second lateral side and adjacent the leading edge. The first channel extends across the body in a direction from the first side edge toward the second side edge. The first channel includes a first end portion and adjacent the first side edge and a second end portion adjacent the second side edge. The first channel is configured to receive the cooling fluid from the cavity to cool the leading edge via a first intermediate channel extending in a radial direction relative to the longitudinal axis between the first supply channel and the first channel. The first end portion of the second channel is directly coupled to the first intermediate channel. The shroud segment yet further includes a second channel disposed within the body adjacent the second lateral side and adjacent the leading edge. The second channel extends across the body in the direction from the first side edge towards the second side edge. The second channel includes a third end portion adjacent the first side edge and a fourth end portion adjacent the second side edge. The second channel is configured to receive the cooling fluid from the cavity to cool the leading edge via a second intermediate channel extending in the radial direction between the second supply channel and the second channel. The fourth end portion of the second channel is directly coupled to the second intermediate channel.

### BRIEF DESCRIPTION OF THE DRAWINGS

These and other features, aspects, and advantages of the present subject matter will become better understood when the following detailed description is read with reference to the accompanying drawings in which like characters represent like parts throughout the drawings, wherein:
FIG. 1 is a block diagram of an embodiment of a turbine system having a turbine shroud with cooling channels;
FIG. 2 is a perspective view of an embodiment of an inner turbine shroud segment coupled to an outer turbine shroud segment;
FIG. 3 is a cross-sectional view (e.g., adjacent a lateral side of a body that is oriented toward a hot gas flow path) of an embodiment of the hot gas flow path component taken along line 3-3 of FIG. 2 (e.g., having cooling channels disposed adjacent a trailing edge);
FIG. 4 is a cross-sectional view (e.g., adjacent a lateral of the body that is oriented toward a hot gas flow path) of an embodiment of the hot gas flow path component taken along line 3-3 of FIG. 2 (e.g., having cooling channels disposed adjacent a leading edge);
FIG. 5 is a cross-sectional view (e.g., adjacent a lateral side of the body that is oriented toward a hot gas flow path) of an embodiment of the hot gas flow path component taken along line 3-3 of FIG. 2 (e.g., having cooling channels disposed adjacent a leading edge and having outlets on the leading edge);
FIG. 6 is a bottom view (e.g. view of a lateral side that is oriented toward a hot gas flow path) of an embodiment of a hot gas flow path component having cooling channels disposed adjacent a leading edge and outlets on the lateral side;
FIG. 7 is a cross-sectional view (e.g., adjacent a lateral side of the body that is oriented toward a hot gas flow path) of an embodiment of the hot gas flow path component taken along line 3-3 of FIG. 2 (e.g., having cooling channels having a hook-shaped end portion);
FIG. 8 is a top view (e.g., view of lateral side that interfaces with a cavity) of an embodiment of a hot gas flow path component (e.g., having supply channels adjacent a trailing edge);
FIG. 9 is a top view (e.g., view of lateral side that interfaces with a cavity) of an embodiment of a hot gas flow path component (e.g., having supply channels adjacent a leading edge); and
FIG. 10 is a perspective cross-sectional view of an embodiment of a portion of the hot gas flow path component of FIG. 3, taken along line 10-10.

### DETAILED DESCRIPTION

One or more specific embodiments of the present subject matter will be described below. In an effort to provide a concise description of these embodiments, all features of an actual implementation may not be described in the specification. It should be appreciated that in the development of any such actual implementation, as in any engineering project, numerous implementation-specific decisions must be made to achieve the developers' specific goals, such as compliance with system-related and business-related constraints, which may vary from one implementation to another. Moreover, it should be appreciated that such a development effort might be complex and time consuming, but would nevertheless be a routine undertaking of fabrication, and manufacture for those of ordinary skill having the benefit of this disclosure.

When introducing elements of various embodiments of the present subject matter, the articles "a," "an," "the," and "said" are intended to mean that there are one or more of the elements. The terms "comprising," "including," and "having" are intended to be inclusive and mean that there may be additional elements other than the listed elements.

The present disclosure is directed to systems and methods for cooling components of a turbine (e.g., turbine shroud) disposed along a hot gas flow path. In particular, an inner turbine shroud segment includes a body that includes near surface channels (e.g., micro-channels) disposed on or adjacent a lateral side oriented toward the hot gas flow path. Although the following discusses these channels in relation to an inner turbine shroud segments, similar embodiments may be utilized in other components disposed along the hot gas flow path (e.g., nozzle sidewall). In certain embodiments, the channels are disposed adjacent the trailing edge and/or the leading edge of the body. In certain embodiments, a pre-sintered preform layer disposed over (e.g., brazed on) the lateral side with the channels together with the body defines the channels. In other embodiments, the channels are completely formed (e.g., casted, additively created, drilled, electrical discharge machined, etc.) within the body. Each channel extends across the body from a first side to a second side edge. Each channel includes a first end portion and a second end portion. The channels adjacent the trailing edge and/or the leading edge are configured to receive a cooling fluid (e.g., discharge air or post-impingement air from a compressor) from a cavity (e.g., bathtub) defined by the inner turbine shroud segment and an outer turbine shroud segment coupled to the inner turbine shroud segment via one or more supply channels (e.g., supply plenum). In certain embodiment, each supply channel is disposed within the body adjacent the first side edge or the second side edge and extends in an axial direction relative a longitudinal axis of a gas turbine engine from the cavity to adjacent to the trailing edge or the leading edge. The channels (e.g., at the first end portion) are coupled to a respective supply channel via intermediate channels extending (e.g., radially) between the channels and the respective supply channel. In other embodiments, a single supply channel may be disposed within the body (e.g., centrally located within the body adjacent the leading or trailing edge) and coupled to the channels via the intermediate channels. These embodiments enable the cooling fluid to flow along a cooling fluid flow path through the supply channel to the channels (via the intermediate channel) and the across the body (from the first end portion to the second end portion) adjacent the trailing edge or the leading edge where the cooling fluid is discharged from the second end portions of the channels via an outlet (e.g., located at a side edge, at a lateral side of inner shroud segment oriented toward the hot gas flow path, at the leading edge or the trailing edge). In certain embodiments, the channels (e.g., the first and second end portions) are oriented so that the cooling fluid flows in a same direction across the body adjacent the leading edge or the trailing edge. In other embodiments, adjacent channels are oriented so that the cooling fluid flows in opposite directions (e.g., counterflow to each other) across the body adjacent the leading edge or the trailing edge. The disclosed embodiments of the inner turbine shroud segment may enable cooling of the inner turbine shroud segment with less air (e.g., than typical cooling systems for turbine shrouds) resulting in reduced costs associated with chargeable air utilized in cooling. In addition, the channels adjacent the trailing edge or the leading edge maximize the use of the cooling fluid's heat capacity. Further, the channels ensure a more uniform temperature near the trailing edge or the leading edge.

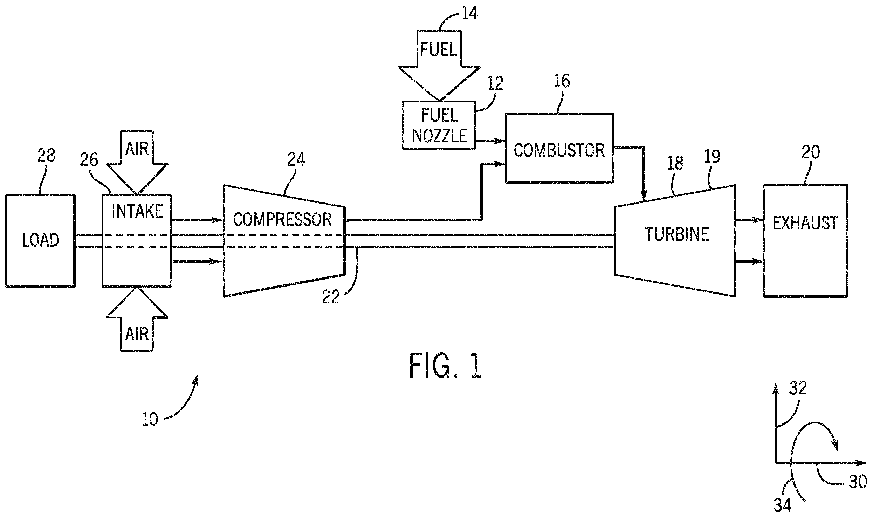

Turning to the drawings, FIG. 1 is a block diagram of an embodiment of a turbine system 10. As described in detail below, the disclosed turbine system 10 (e.g., a gas turbine engine) may employ a turbine shroud having cooling channels, described below, which may reduce the stress modes in the hot gas path components and improve the efficiency of the turbine system 10. As noted above, similar cooling channels may be utilized in other components disposed along the hot gas flow path (e.g., nozzle sidewall). The turbine system 10 may use liquid or gas fuel, such as natural gas and/or a hydrogen rich synthetic gas, to drive the turbine system 10. As depicted, fuel nozzles 12 intake a fuel supply 14, mix the fuel with an oxidant, such as air, oxygen, oxygen-enriched air, oxygen reduced air, or any combination thereof. Although the following discussion refers to the oxidant as the air, any suitable oxidant may be used with the disclosed embodiments. Once the fuel and air have been mixed, the fuel nozzles 12 distribute the fuel-air mixture into a combustor 16 in a suitable ratio for optimal combustion, emissions, fuel consumption, and power output. The turbine system 10 may include one or more fuel nozzles 12 located inside one or more combustors 16.

The fuel-air mixture combusts in a chamber within the combustor 16, thereby creating hot pressurized exhaust gases. The combustor 16 directs the exhaust gases (e.g., hot pressurized gas) through a transition piece into a turbine nozzle (or "stage one nozzle"), and other stages of buckets (or blades) and nozzles causing rotation of a turbine 18 within a turbine casing 19 (e.g., outer casing). The exhaust gases flow toward an exhaust outlet 20. As the exhaust gases pass through the turbine 18, the gases force turbine buckets (or blades) to rotate a shaft 22 along an axis of the turbine system 10. As illustrated, the shaft 22 may be connected to various components of the turbine system 10, including a compressor 24. The compressor 24 also includes blades coupled to the shaft 22. As the shaft 22 rotates, the blades within the compressor 24 also rotate, thereby compressing air from an air intake 26 through the compressor 24 and into the fuel nozzles 12 and/or combustor 16. A portion of the compressed air (e.g., discharged air) from the compressor 24 may be diverted to the turbine 18 or its components without passing through the combustor 16. The discharged air (e.g., cooling fluid) may be utilized to cool turbine components such as shrouds and nozzles on the stator, along with buckets, disks, and spacers on the rotor. The shaft 22 may also be connected to a load 28, which may be a vehicle or a stationary load, such as an electrical generator in a power plant or a propeller on an aircraft, for example. The load 28 may include any suitable device capable of being powered by the rotational output of the turbine system 10. The turbine system 10 may extend along an axial axis or direction 30, a radial direction 32 toward or away from the axis 30, and a circumferential direction 34 around the axis 30. In an embodiment, hot gas components (e.g., turbine shroud, nozzle, etc.) are located in the turbine 18, where hot gases flow across the components causing creep, oxidation, wear, and thermal fatigue of the turbine components. The turbine 18 may include one or more turbine shroud segments (e.g., inner turbine shroud segments) having a cooling passages (e.g., near surface micro-channels) to enable control of the temperature of the hot gas path components (e.g., utilizing less cooling air than typical cooling systems for shrouds) to reduce distress modes in the components, to extend service life of the components (while performing their intended functions), reduce costs associated with operating the turbine system 10, and to improve the efficiency of the gas turbine system 10.

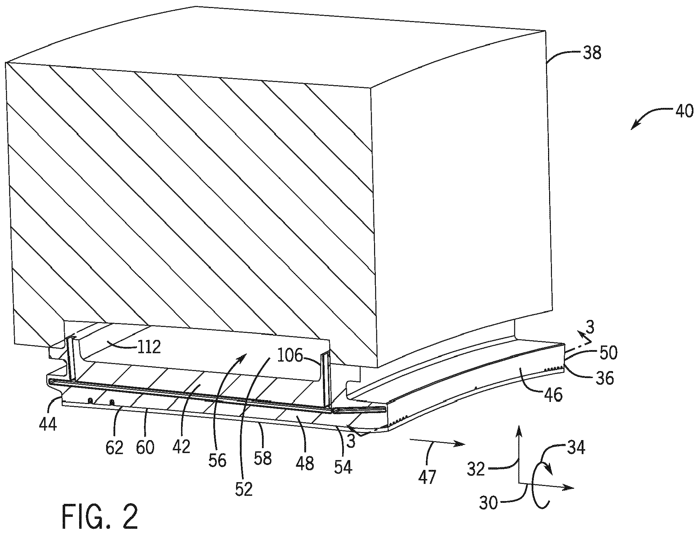

FIG. 2 is a perspective view of an embodiment of a hot gas flow path component such as an inner turbine shroud segment 36 coupled to an outer turbine shroud segment 38 to form a turbine shroud segment 40. The turbine 18 includes multiple turbine shroud segments 40 that together form a respective ring about respective turbine stages. In certain embodiments, the turbine 18 may include multiple inner turbine shroud segments 36 coupled to respective outer turbine shroud segments 38 for each turbine shroud segment 40 disposed in the circumferential direction 34 about a rotational axis of the turbine 18 (and a turbine stage). In other embodiments, the turbine 18 may include multiple inner turbine shroud segments 38 coupled to the outer turbine shroud segment 38 to form the turbine shroud segment 40.

As depicted, the inner turbine shroud segment 40 includes a body 42 having an upstream or leading edge 44 and a downstream or trailing edge 46 that both interface with a hot gas flow path 47. The body 42 also includes a first side edge 48 (e.g., first slash face) and a second side edge 50 (e.g., second slash face) disposed opposite the first side edge 48 both extending between the leading edge 44 and the trailing edge 46. The body 42 further includes a pair of opposed lateral sides 52, 54 extending between the leading and trailing edges 44, 46 and the first and second side edges 48, 50. In certain embodiments, the body 42 (particularly, lateral sides 52, 54) may be arcuate shaped in the circumferential direction 34 between the first and second side edges 48, 50 and/or in the axial direction 30 between the leading and trailing edges 44, 46. The lateral side 52 is configured to interface with a cavity 56 defined between the inner turbine shroud segment 36 and the outer turbine shroud segment 38. The lateral side 54 is configured to be oriented toward the hot gas flow path 47 within the turbine 18.

As described in greater detail below, the body 42 may include multiple channels (e.g., cooling channels or micro-channels) disposed within the lateral side 54 to help cool the hot gas flow path components (e.g., turbine shroud 40, inner turbine shroud segment 36, etc.). In certain embodiments, some of these channels are disposed adjacent the trailing edge 46 or the leading edge 44 or both with or without other channels disposed within the lateral side 54 on other portions of the body 42. A pre-sintered preform (PSP) layer 58 may be disposed on (e.g., brazed onto) the lateral side 54 so that a first surface 60 of the PSP layer 58 together with the body 42 defines (e.g., enclose) the channels and a second surface 62 of the PSP layer 58 interfaces with the hot gas flow path 47. The PSP layer 58 may be formed of superalloys and brazing material. In certain embodiments, as an alternative to the PSP layer 58 a non-PSP metal sheet may be disposed on the lateral side 54 that together with the body 42 defines the channels. In certain embodiments, as an alternative to the PSP layer 58, a barrier coating or thermal barrier coating bridging may be utilized to enclose the channels within the body 42. In certain embodiments, the channels may be completely disposed within the body 42 near the lateral side 54. The channels may be formed or machined in the body via electrical discharge machining, drilling, casting, additive manufacturing, a combination thereof, or any other technique.

In certain embodiments, the body 42 includes hook portions to enable coupling of the inner turbine shroud turbine segment 36 to the outer turbine shroud segment 38. As mentioned above, the lateral side 52 of the inner turbine shroud segment 36 and the outer turbine shroud segment 38 define the cavity 56. The outer turbine shroud segment 38 is generally proximate to a relatively cool fluid or air (i.e., cooler than the temperature in the hot gas flow path 47) in the turbine 18 from the compressor 24. The outer turbine shroud segment 38 includes a passage (not shown) to receive the cooling fluid or air from the compressor 24 that provides the cooling fluid to the cavity 56. As described in greater detail below, the cooling fluid flows to the channels within the body 42 (e.g., disposed adjacent the leading edge 44 or the trailing edge 46 and extending in a direction (e.g., circumferentially 34) between the side edges 48, 50) of the inner turbine shroud segment 36 via supply channels or plenums disposed within the body 42 extending (e.g., axially 30) from the cavity 56 to adjacent the leading edge 44 or the trailing edge 46. The supply channels are disposed adjacent the first side edge 48 and/or the second side edge 50. In addition, the supply channels are disposed radially 32 outward (e.g., further from the longitudinal axis of the gas turbine engine) than the channels adjacent the trailing edge 46 or the leading edge 44. Intermediate channels couple (e.g., fluidly couple) the channels to the supply channels. Each channel includes a first end portion and a second end portion. In certain embodiments, the first end portion includes a hook-shaped portion having a free end. The first end portion is coupled to the intermediate channels to receive the cooling fluid. The second end portion includes an outlet (e.g., cooling fluid outlet) disposed on the leading edge 44 or the trailing edge 46, the side edges 48, 50, or the lateral side 54 to discharge the cooling fluid form the body 42. In certain embodiments, adjacent channels may be arranged in an alternating pattern (e.g., having counterflow in opposite directions) with a channel having the first end portion disposed adjacent the first side edge 48 and the second end portion disposed adjacent the second side edge 50, while an adjacent channel has the opposite orientation (i.e., the first end portion disposed adjacent the second side edge 50 and the second end portion disposed adjacent the first side edge 48). The shape of the channels is also optimized to provide adequate cooling in the event of plugged channels. The disclosed embodiments of the inner turbine shroud segment may enable cooling of the inner turbine shroud segment with less air (e.g., than typical cooling systems for turbine shrouds) resulting in reduced costs associated with regards to chargeable air utilized in cooling. In addition, the channels adjacent the trailing edge or the leading edge maximize the use of the cooling fluid's heat capacity. Further the channels ensure a more uniform temperature near the trailing edge or the leading edge.

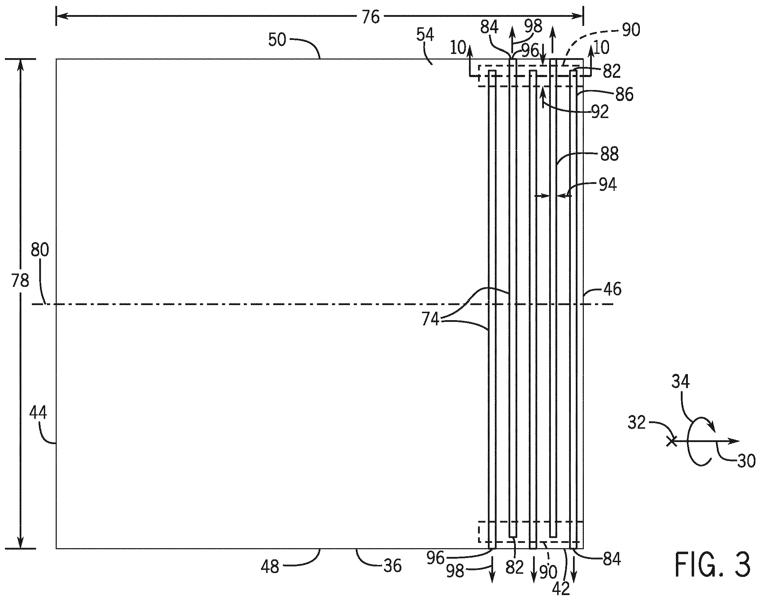

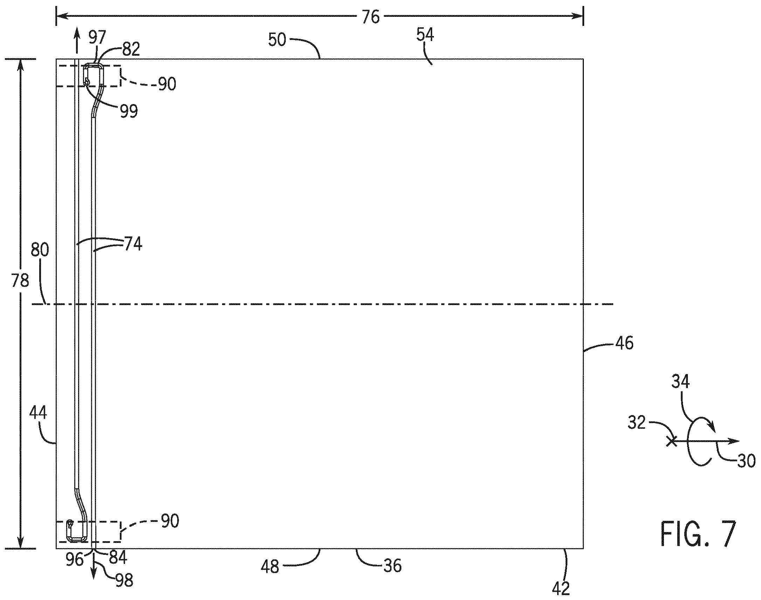

FIG. 3 is a cross-sectional view (e.g., adjacent the lateral side 54 of the body 42 that is oriented toward the hot gas flow path) of an embodiment of the hot gas flow path component (e.g., the inner turbine shroud segment 36) taken along line 3-3 of FIG. 2 (e.g., having cooling channels 74 disposed adjacent the trailing edge 46). It should be noted a bottom view of the lateral side 54 (in an embodiment where channels 74 are formed in the lateral side 54) would look similar to FIG. 3. As depicted, the body 42 includes a plurality of channels 74 (e.g., cooling channels or micro-channels) disposed within the lateral side 54 adjacent the trailing edge 46. The body 42 may include 2 to 10 or more channels 74 disposed adjacent the trailing edge 46. As depicted, the channels 74 are parallel with respect to each other. The entirety of the channels 74 may be disposed within the last approximately 25 percent of the length 76 of the body 42 adjacent the trailing edge 46. In certain embodiments, the channels 74 may be disposed within the last approximately 10 to 25 percent of the length 76 of the body 42 adjacent the trailing edge 46. For example, the channels 74 may be disposed within the last approximately 10, 15, 20, or 25 percent of the length 76. Each channel 74 extends across the body 42 (e.g., circumferentially 34) from adjacent the side edge 48 to adjacent the side edge 50. In certain embodiments, each channel 74 may extend approximately 80 to 99 percent of a length 78 between the side edges 48, 50. For example, each channel 74 may extend approximately 80, 85, 90, 95, or 99 percent of the length 78. The channels 74 may include any cross-sectional shape (e.g., in the radial direction 32 relative to a longitudinal axis 80 of the body 46, turbine 18, or gas turbine engine 10). For example, the cross-sectional shape may be semi-elliptical, rectilinear, triangular, or any other cross-sectional shape. Each channel 74 includes a first end portion 82 and a second end portion 84. In certain embodiments, the first end portion 82 may include a hook-shaped portion having a free end (see FIG. 7). As depicted, some of the channels 74 (e.g., channel 86) include the first end portion 82 disposed adjacent the side edge 50 and the second end portion 82 disposed adjacent the side edge 48, while some of the channels 74 (e.g., channel 88) include the first end portion 82 disposed adjacent the side edge 48 and the second end portion 84 disposed adjacent the side edge 50. In certain embodiments, the channels 74 are disposed in an alternating pattern (e.g., channels 86, 88) with one channel 74 having the first end portion 82 disposed adjacent one side edge 48 or 50 and the second end portion 84 disposed adjacent the opposite side edge 48 or 50 with the adjacent channel 74 having the opposite orientation (e.g., providing counterflows for the cooling fluid).

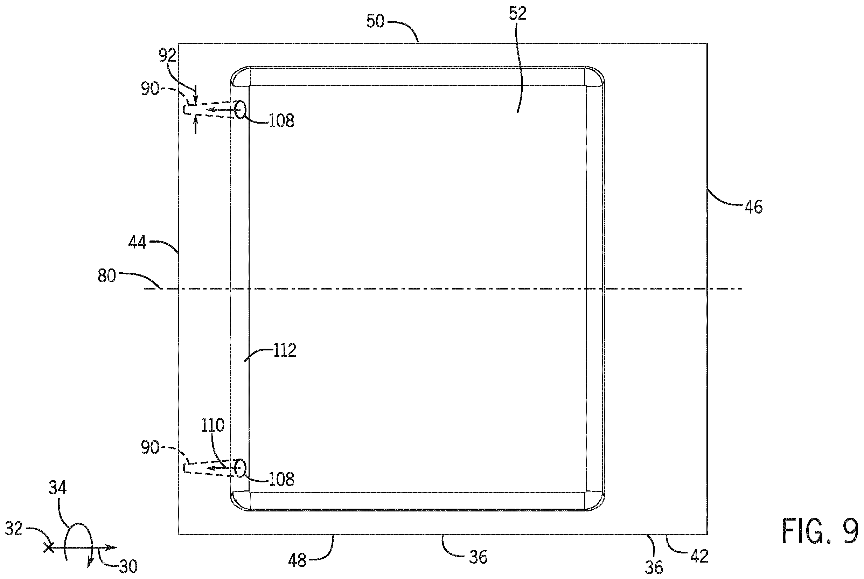

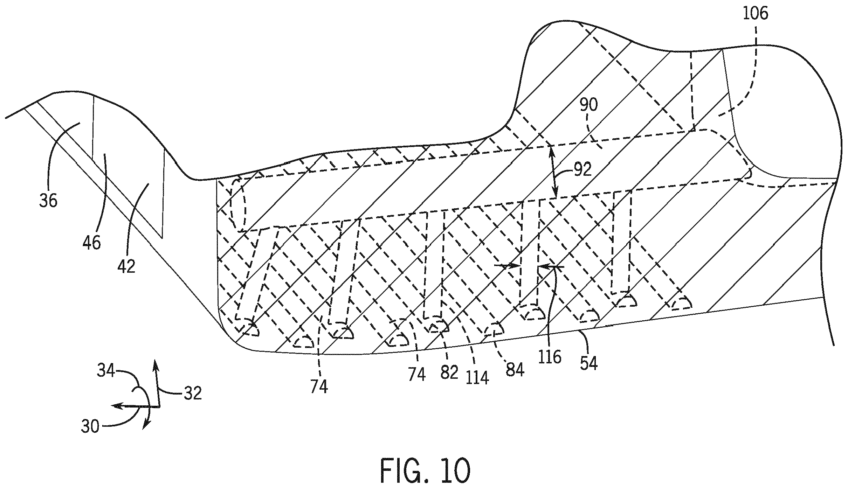

Each channel 74 is configured to receive a cooling fluid from the cavity 56 from a respective supply channel or plenum 90 (shown in dashed lines) via intermediate channels (see FIG. 10). In particular, the first end portion 82 of each channel 74 is coupled to the supply channel 90 via a respective intermediate channel to receive the cooling fluid. The supply channels 90 are disposed radially 32 outward relative to the longitudinal axis 80 from the channels 74. As depicted, supply channels 90 are disposed adjacent to the side edges 48, 50, respectively. The supply channels 90 extend (e.g., axially) from the cavity 56 to adjacent the trailing edge 46. The supply channels 90 are disposed at a same axial location relative to the longitudinal axis 80. In certain embodiments, the supply channels 90 may be angled (e.g., at an oblique angle) relative to the longitudinal axis 80. In certain embodiments, the supply channels 90 may include a width or diameter 92 that narrows in the axial direction 30 from the cavity 56 towards the trailing edge 46 (similar to FIG. 9 that shows narrowing of the supply channels 90 in an embodiment with channels 74 disposed near the leading edge 44) to provide a uniform pressure to each channel 74 along the respective supply channel 90. In certain embodiments, the width or diameter 92 (or cross-sectional area) is greater than a width or diameter 94 (or cross-sectional area) of the channels 74. The supply channels 90 may include any cross-sectional shape (e.g., in the radial direction 32 relative to a longitudinal axis 80 of the body 46, turbine 18, or gas turbine engine 10). For example, the cross-sectional shape may be semi-elliptical, rectilinear, triangular, or any other cross-sectional shape. As depicted, the first end portions 82 of the channels 74 disposed adjacent the side edge 50 are fluidly coupled to the supply channel 90 adjacent the side edge 50, while the first end portions 82 of the channels 74 disposed adjacent the side edge 48 are fluidly coupled to the supply channel 90 adjacent the side 48. In certain embodiments, the channels 74 may be oriented to have all of the first end portions 82 adjacent one of the side edges 48, 50 with the second end portions 84 adjacent the other side edge 48, 50. In such an embodiment, each channel 74 may be fluidly coupled to a single supply channel 90.

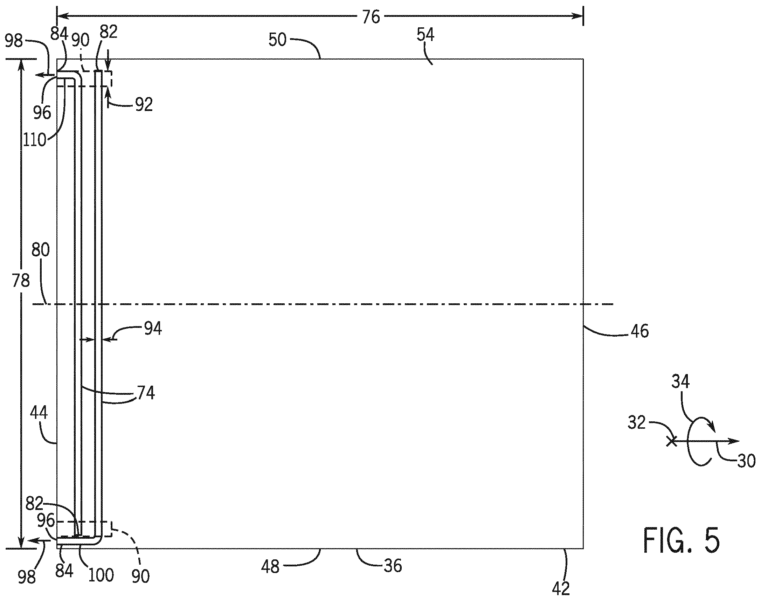

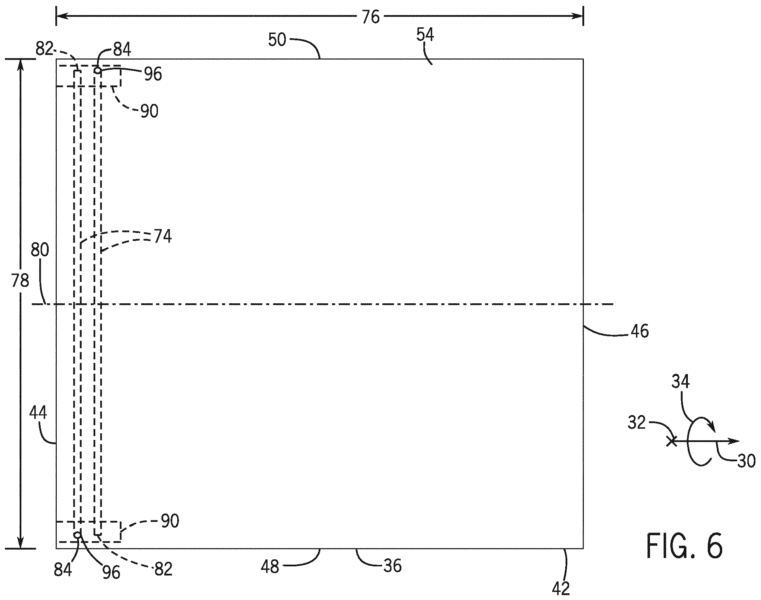

As depicted, the second end portions 84 of the channels 74 each include an outlet 96 (e.g., cooling fluid outlet) to discharge the cooling fluid as indicated by arrows 98. Also, as depicted, the outlets 96 are disposed on the respective side edge 48, 50 that the second end portion 84 of the channel 74 is disposed near. In certain embodiments, the channels 74 may turn toward the trailing edge 46 and the outlets 96 of the channels 74 may be disposed on the trailing edge 46 (see FIG. 5 where similarly the outlets 96 are disposed on the leading edge 44). In other embodiments, the outlets of the channels 74 may be disposed on the lateral surface 54 (see FIG. 6). The shape of the channels 74 is also optimized to provide adequate cooling in the event of plugged channels. The disclosed embodiments of the inner turbine shroud segment 36 may enable cooling of the inner turbine shroud segment with less air (e.g., than typical cooling systems for turbine shrouds) resulting in reduced costs associated with regards to chargeable air utilized in cooling. In addition, the channels 74 adjacent the trailing edge 46 maximize the use of the cooling fluid's heat capacity. Further, the channels 74 ensure a more uniform temperature near the trailing edge 46. In certain embodiments, a single supply channel 90 may be disposed within the body (e.g., centrally located within the body 46 adjacent the trailing edge 46) and coupled to the channels 74 via the intermediate channels.

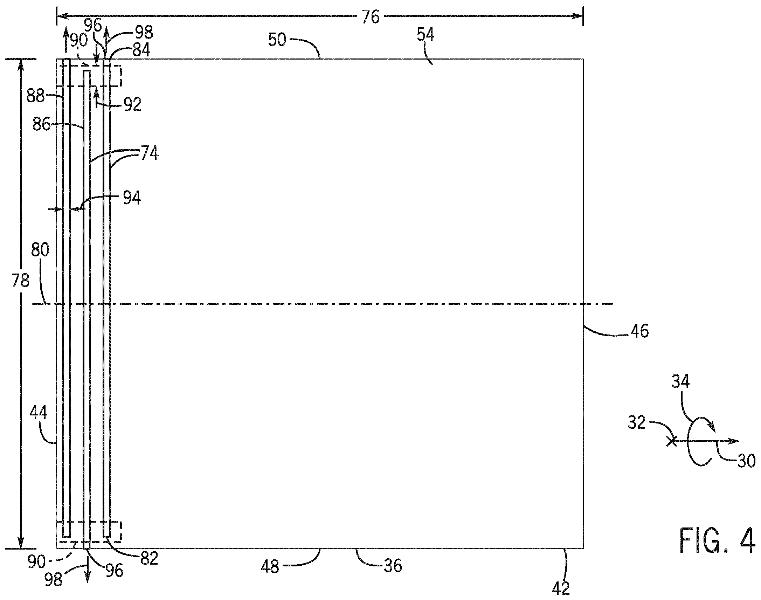

FIG. 4 is a cross-sectional view (e.g., adjacent the lateral side 54 of the body 42 that is oriented toward the hot gas flow path) of an embodiment of the hot gas flow path component (e.g., the inner turbine shroud segment 36) taken along line 3-3 of FIG. 2 (e.g., having cooling channels 74 disposed adjacent the leading edge 44). It should be noted a bottom view of the lateral side 54 (in an embodiment where channels 74 are formed in the lateral side 54) would look similar to FIG. 4. As depicted, the body 42 includes a plurality of channels 74 (e.g., cooling channels or micro-channels) disposed within the lateral side 54 adjacent the leading edge 44. The body 42 may include 2 to 10 or more channels 74 disposed adjacent the leading edge 44. As depicted, the channels 74 are parallel with respect to each other. The entirety of the channels 74 may be disposed within the first approximately 25 percent of the length 76 of the body 42 adjacent the leading edge 44. In certain embodiments, the channels 74 may be disposed within the first approximately 10 to 25 percent of the length 76 of the body 42 adjacent the leading edge 44. For example, the channels 74 may be disposed within the first approximately 10, 15, 20, or 25 percent of the length 76. Each channel 74 extends across the body 42 (e.g., circumferentially 34) from adjacent the side edge 48 to adjacent the side edge 50. In certain embodiments, each channel 74 may extend approximately 80 to 99 percent of a length 78 between the side edges 48, 50. For example, each channel 74 may extend approximately 80, 85, 90, 95, or 99 percent of the length 78. The channels 74 may include any cross-sectional shape (e.g., in the radial direction 32 relative to a longitudinal axis 80 of the body 46, turbine 18, or gas turbine engine 10). For example, the cross-sectional shape may be semi-elliptical, rectilinear, triangular, or any other cross-sectional shape. Each channel 74 includes a first end portion 82 and a second end portion 84. In certain embodiments, the first end portion 82 may include a hook-shaped portion having a free end (see FIG. 7). As depicted, some of the channels 74 (e.g., channel 86) include the first end portion 82 disposed adjacent the side edge 50 and the second end portion 82 disposed adjacent the side edge 48, while some of the channels 74 (e.g., channel 88) include the first end portion 82 disposed adjacent the side edge 48 and the second end portion 84 disposed adjacent the side edge 50. In certain embodiments, the channels 74 are disposed in an alternating pattern (e.g., channels 86, 88) with one channel 74 having the first end portion 82 disposed adjacent one side edge 48 or 50 and the second end portion 84 disposed adjacent the opposite side edge 48 or 50 with the adjacent channel 74 having the opposite orientation (e.g., providing counterflows for the cooling fluid).

Each channel 74 is configured to receive a cooling fluid from the cavity 56 from a respective supply channel or plenum 90 (shown in dashed lines) via intermediate channels (see FIG. 10). In particular, the first end portion 82 of each channel 74 is coupled to the supply channel 90 via a respective intermediate channel to receive the cooling fluid. The supply channels 90 are disposed radially 32 outward relative to the longitudinal axis 80 from the channels 74. As depicted, supply channels 90 are disposed adjacent to the side edges 48, 50, respectively. The supply channels 90 extend (e.g., axially) from the cavity 56 to adjacent the leading edge 44. The supply channels 90 are disposed at a same axial location relative to the longitudinal axis 80. In certain embodiments, the supply channels 90 may be angled (e.g., at an oblique angle) relative to the longitudinal axis 80. In certain embodiments, the supply channels 90 may include a width or diameter 92 that narrows in the axial direction 30 from the cavity 56 towards the leading edge 44 (see FIG. 9) to provide a uniform pressure to each channel 74 along the respective supply channel 90. In certain embodiments, the width or diameter 92 (or cross-sectional area) is greater than a width or diameter 94 (or cross-sectional area) of the channels 74. The supply channels 90 may include any cross-sectional shape (e.g., in the radial direction 32 relative to a longitudinal axis 80 of the body 46, turbine 18, or gas turbine engine 10). For example, the cross-sectional shape may be semi-elliptical, rectilinear, triangular, or any other cross-sectional shape. As depicted, the first end portions 82 of the channels 74 disposed adjacent the side edge 50 are fluidly coupled to the supply channel 90 adjacent the side edge 50, while the first end portions 82 of the channels 74 disposed adjacent the side edge 48 are fluidly coupled to the supply channel 90 adjacent the side 48. In certain embodiments, the channels 74 may be oriented to have all of the first end portions 82 adjacent one of the side edges 48, 50 with the second end portions 84 adjacent the other side edge 48, 50. In such an embodiment, each channel 74 may be fluidly coupled to a single supply channel 90.

As depicted, the second end portions 84 of the channels 74 each include an outlet 96 (e.g., cooling fluid outlet) to discharge the cooling fluid as indicated by arrows 98. Also, as depicted, the outlets 96 are disposed on the respective side edge 48, 50 that the second end portion 84 of the channel 74 is disposed near. In certain embodiments, the channels 74 may turn toward the leading edge 44 and the outlets 96 of the channels 74 may be disposed on the leading edge 44 (see FIG. 5). In other embodiments, the outlets of the channels 74 may be disposed on the lateral surface 54 (see FIG. 6). The shape of the channels 74 is also optimized to provide adequate cooling in the event of plugged channels. The disclosed embodiments of the inner turbine shroud segment 36 may enable cooling of the inner turbine shroud segment with less air (e.g., than typical cooling systems for turbine shrouds) resulting in reduced costs associated with regards to chargeable air utilized in cooling. In addition, the channels 74 adjacent the leading edge 44 maximize the use of the cooling fluid's heat capacity. Further, the channels 74 ensure a more uniform temperature near the leading edge 44. In certain embodiments, a single supply channel 90 may be disposed within the body (e.g., centrally located within the body 46 adjacent the leading edge 44) and coupled to the channels 74 via the intermediate channels.

FIG. 5 is a cross-sectional view (e.g., adjacent the lateral side 54 of the body 42 that is oriented toward the hot gas flow path) of an embodiment of the hot gas flow path component (e.g., the inner turbine shroud segment 36) taken along line 3-3 of FIG. 2 (e.g., having cooling channels 74 disposed adjacent the leading edge 44 and outlets 96 disposed on the leading edge 44). It should be noted a bottom view of the lateral side 54 (in an embodiment where channels 74 are formed in the lateral side 54) would look similar to FIG. 5. The inner turbine shroud segment 36 is as described in FIG. 4 except the outlets 96 of the channels 74 are disposed on the leading edge 44. Specifically, the channels 74 include a portion 100 that extends axially 32 to the leading edge 44. In certain embodiments, the outlets 96 for channels 74 disposed adjacent the trailing edge 46 may be disposed on the trailing edge 46. In certain embodiments, a single supply channel 90 may be disposed within the body (e.g., centrally located within the body 46 adjacent the leading edge 44) and coupled to the channels 74 via the intermediate channels.

FIG. 6 is a bottom view (e.g. view of the lateral side 54 of the body 42 that is oriented toward the hot gas flow path) of an embodiment of the hot gas flow path component (e.g., the inner turbine shroud segment 36). The inner turbine shroud segment 36 is as described in FIG. 4 except the outlets 96 (shown in solid lines) of the channels 74 (shown in dashed lines) are disposed on the lateral side 54 of the body 42 to discharge the cooling fluid radially 32. In certain embodiments, the outlets 96 for channels 74 disposed adjacent the trailing edge 46 may be disposed on the lateral side 54. In certain embodiments, a single supply channel 90 may be disposed within the body (e.g., centrally located within the body 46 adjacent the trailing edge 46) and coupled to the channels 74 via the intermediate channels.

FIG. 7 is a cross-sectional view (e.g., adjacent the lateral side 54 of the body 42 that is oriented toward a hot gas flow path) of an embodiment of the hot gas flow path component (e.g., the inner turbine shroud segment 36) taken along line 3-3 of FIG. 2 (e.g., having cooling channels 74 having a hook-shaped end portion). It should be noted a bottom view of the lateral side 54 (in an embodiment where channels 74 are formed in the lateral side 54) would look similar to FIG. 7. The inner turbine shroud segment 36 is as described in FIG. 4 except the first end portions 82 of the channels 74 each includes a hook-shaped portion 97 having a free end 99. The free end 99 of each hook-shaped portion 97 is coupled to a respective supply channel 90 to receive the cooling fluid via an intermediate channel. Each hook-shaped portion 97 has a hook turn radius ranging from approximately 0.05 to 4 millimeters (mm), 0.1 to 3 mm, 1.14 to 2.5 mm, and all subranges therebetween. The curvature of the hook-shaped portion 97 enables more channels 74 to be disposed within the lateral side 54 adjacent the leading edge 44 (or trailing edge 46). In addition, the hook-shaped portion 97 provide a larger cooling region (e.g., larger than typical cooling systems for turbine shrouds) by increasing a length of cooling channel 74 adjacent the side edges 48, 50 while keeping flow at a minimum. In addition, the hook-shaped portion 97 enables better spacing of the straight portions of the channels 74. Further, the turning back of the hook-shaped portion 97 enables the straight portions of the channels 74 to be uniformly distant from an adjacent channel 74 to cool the portion of the body 42 between the side edges 48, 50. In certain embodiments, the hook-shaped portion 97 could be adjusted to enable the spacing of the straight portions of the channels 74 to be tighter packed for higher heat load zones. In certain embodiments, a single supply channel 90 may be disposed within the body (e.g., centrally located within the body 46 adjacent the leading 44 or trailing edge 46) and coupled to the channels 74 via the intermediate channels.

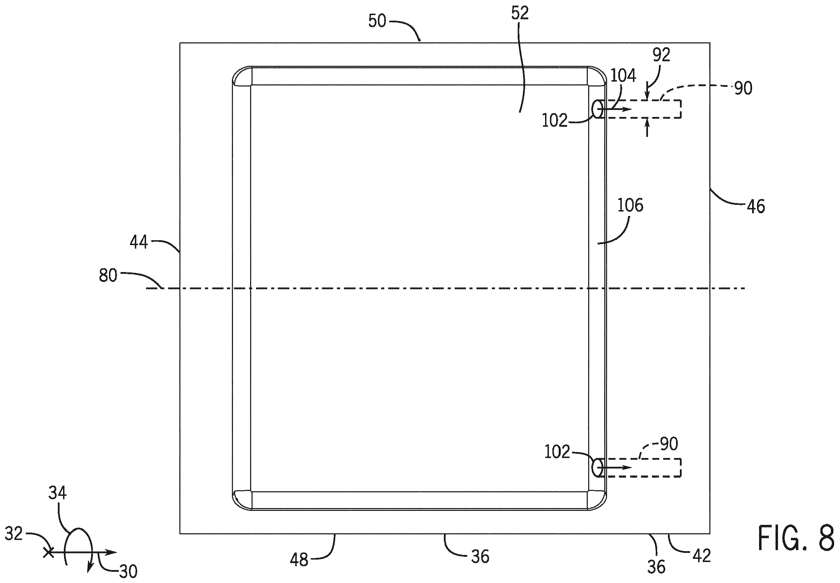

FIG. 8 is a top view (e.g., view of lateral side 52 that interfaces with the cavity 56) of an embodiment of the hot gas flow path component (e.g., the inner turbine shroud segment 36) (e.g., having supply channels 90 adjacent the trailing edge 46). The inner turbine shroud segment 36 is as described in FIG. 3. The supply channels 90 (shown in dashed lines) are disposed radially 32 outward relative to the longitudinal axis 80 from the channels 74. As depicted, supply channels 90 are disposed adjacent to the side edges 48, 50, respectively. The supply channels 90 each include an inlet 102 to receive the cooling fluid (as indicated arrow 104) from the cavity 56. The inlet 102 is disposed on a wall 106 (adjacent the trailing edge 46) that extends radially 32 away from the lateral side 52. The wall 106 along with other components of the turbine shroud segment 40 help define the cavity 56 (see FIG. 2). The supply channels 90 extend (e.g., axially 32) from the cavity 56 to adjacent the trailing edge 46. The supply channels 90 are disposed at a same axial location relative to the longitudinal axis 80. In certain embodiments, the supply channels 90 may be angled (e.g., at an oblique angle) relative to the longitudinal axis 80. In certain embodiments, the supply channels 90 may include a width or diameter 92 that narrows in the axial direction 30 from the cavity 56 towards the trailing edge 46 (see FIG. 9) to provide a uniform pressure to each channel 74 along the respective supply channel 90. The supply channels 90 may include any cross-sectional shape (e.g., in the radial direction 32 relative to a longitudinal axis 80 of the body 46, turbine 18, or gas turbine engine 10). For example, the cross-sectional shape may be semi-elliptical, rectilinear, triangular, or any other cross-sectional shape. In certain embodiments, a single supply channel 90 may be disposed within the body (e.g., centrally located within the body 46 adjacent the leading 44 or trailing edge 46) and coupled to the channels 74 via the intermediate channels.

FIG. 9 is a top view (e.g., view of lateral side 52 that interfaces with the cavity 56) of an embodiment of the hot gas flow path component (e.g., the inner turbine shroud segment 36) (e.g., having supply channels 90 adjacent the leading edge 44). The inner turbine shroud segment 36 is as described in FIG. 3. The supply channels 90 (shown in dashed lines) are disposed radially 32 outward relative to the longitudinal axis 80 from the channels 74. As depicted, supply channels 90 are disposed adjacent to the side edges 48, 50, respectively. The supply channels 90 each include an inlet 108 to receive the cooling fluid (as indicated arrow 110) from the cavity 56. The inlet 108 is disposed on a wall 112 (adjacent the leading edge 44) that extends radially 32 away from the lateral side 52. The wall 112 along with other components of the turbine shroud segment 40 help define the cavity 56 (see FIG. 2). The supply channels 90 extend (e.g., axially 32) from the cavity 56 to adjacent the leading edge 44. The supply channels 90 are disposed at a same axial location relative to the longitudinal axis 80. In certain embodiments, the supply channels 90 may be angled (e.g., at an oblique angle) relative to the longitudinal axis 80 toward a respective adjacent side edge 48, 50. In certain embodiments, as depicted in FIG. 9, the supply channels 90 may include a width or diameter 92 that narrows in the axial direction 30 from the cavity 56 towards the leading edge 44 to provide a uniform pressure to each channel 74 along the respective supply channel 90. The supply channels 90 may include any cross-sectional shape (e.g., in the radial direction 32 relative to a longitudinal axis 80 of the body 46, turbine 18, or gas turbine engine 10). For example, the cross-sectional shape may be semi-elliptical, rectilinear, triangular, or any other cross-sectional shape. In certain embodiments, a single supply channel 90 may be disposed within the body (e.g., centrally located within the body 46 adjacent the leading edge 44) and coupled to the channels 74 via the intermediate channels.

FIG. 10 is a perspective cross-sectional view of an embodiment of a portion of the hot gas flow path component (e.g., the inner turbine shroud segment 36) of FIG. 3, taken along line 10-10. The inner turbine shroud segment 36 is as described in FIG. 3. As depicted, intermediate channels 114 radially 32 extend between the supply channel 90 and the first end portions 82 of the channels 74. The intermediate channels 114 fluidly coupled the supply channel 90 and the channels 74 enabling the supply channel 90 to provide cooling fluid to the channels 74. The intermediate channels 114 may include any cross-sectional shape (axial cross-sectional shape). For example, the cross-sectional shape may be semi-elliptical, rectilinear, triangular, or any other cross-sectional shape. Each intermediate channel 144 includes a width or diameter 116 that is less than a width or diameter 92 of the supply channel 90. In certain embodiments, a single supply channel 90 may be disposed within the body (e.g., centrally located within the body 46 adjacent the leading 44 or trailing edge 46) and coupled to the channels 74 via the intermediate channels 114.

Technical effects of the disclosed embodiments include providing systems and methods for cooling the leading edge 44 and/or the trailing edge 46 of the inner turbine shroud segment 36. In particular, the hot gas flow path component (e.g., the inner turbine shroud segment 36) includes near surface micro-channels 74 adjacent or on the lateral side 54 of the body 42. The channels 74 are coupled to a respective supply channel to receive the cooing fluid. The shape of the channels 74 is also optimized to provide adequate cooling in the event of plugged channels 74. The disclosed embodiments of the inner turbine shroud segment 36 may enable cooling of the leading edge 44 and/or the trailing edge 46 of the inner turbine shroud segment 36 with less air (e.g., than typical cooling systems for turbine shrouds) resulting in reduced costs associated with regards to chargeable air utilized in cooling. In addition, the channels 74 adjacent the leading edge 44 and/or the trailing edge 46 maximize the use of the cooling fluid's heat capacity. Further, the channels 74 ensure a more uniform temperature near the leading edge 44 and/or the trailing edge 46.

This written description uses examples to disclose the subject matter, including the best mode, and also to enable any person skilled in the art to practice the subject matter, including making and using any devices or systems and performing any incorporated methods. The patentable scope of the subject matter is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims.

Various aspects and embodiments of the present invention are defined by the following numbered clauses:
1. A hot gas flow path component for use in a turbine section of a gas turbine engine, comprising:
   a body including a leading edge, a trailing edge, a first side edge, a second side edge, and a pair of opposed lateral sides between the leading and trailing edges and the first and second side edges, wherein a first lateral side of the pair of opposed lateral sides is configured to interface with a cavity having a cooling fluid, and a second lateral side of the pair of opposed lateral sides is oriented toward a hot gas flow path;
   a first supply channel disposed within the body and extending in an axial direction relative to a longitudinal axis of the gas turbine engine from the cavity to adjacent the leading edge or the trailing edge, wherein the first supply channel is configured to receive the cooling fluid from the cavity; and
   a first channel disposed within the body adjacent the second lateral side and adjacent the trailing edge or the leading edge, wherein the first channel extends across the body in a direction from the first side edge toward the second side edge, and the first channel comprises a first end portion adjacent the first side edge and a second end portion adjacent the second side edge, and wherein the first channel is configured to receive the cooling fluid from the cavity to cool the trailing edge or the leading edge via a first intermediate channel extending in a radial direction relative to the longitudinal axis between the first supply channel and the first channel.
2. The hot gas flow path component of clause 1, wherein the first supply channel extends in the axial direction from the cavity to adjacent the leading edge, and the first channel is disposed adjacent the leading edge.
3. The hot gas flow path component of clause 1 or clause 2, wherein the first supply channel extends in the axial direction from the cavity to adjacent the trailing edge, and the first channel is disposed adjacent the trailing edge.
4. The hot gas flow path component of any preceding clause, wherein the second end portion comprises a cooling fluid outlet to discharge the cooling fluid from the body.
5. The hot gas flow path component of any preceding clause, wherein the second end portion extends to the second side edge and the cooling fluid outlet is disposed on the second side edge to discharge the cooling fluid from the body.
6. The hot gas flow path component of any preceding clause, wherein the second end portion extends to the second lateral side and the cooling fluid outlet is disposed on the second lateral side to discharge the cooling fluid from the body.
7. The hot gas flow path component of any preceding clause, wherein the second end portion extends to the trailing edge or the leading edge and the cooling fluid outlet is disposed on the trailing edge or the leading edge to discharge the cooling fluid from the body.
8. The hot gas flow path component of any preceding clause, wherein the first end portion is coupled to the first intermediate channel.
9. The hot gas flow path component of any preceding clause, wherein the first end portion comprises a hooked shape having a free end, and the first intermediate channel is coupled to the free end.
10. The hot gas flow path component of any preceding clause, comprising a second channel disposed within the body adjacent the second lateral side and adjacent the trailing edge or the leading edge, wherein the second channel extends across the body in the direction from the first side edge toward the second side edge, and the second channel comprises a third end portion adjacent the first side edge and a fourth end portion adjacent the second side edge, and wherein the second channel is configured to receive the cooling fluid from the cavity to cool the trailing edge or the leading edge via a second intermediate channel extending in the radial direction relative to the longitudinal axis between the first supply channel and the second channel.
11. The hot gas flow path component of any preceding clause, wherein a radial cross-section area of the first supply channel can decrease in the axial direction from the cavity to adjacent to the leading edge or the trailing edge.
12. The hot gas flow path component of any preceding clause, wherein the first supply channel is disposed adjacent the first side edge, the first end portion of the first channel is directly coupled to the first intermediate channel, and the shroud segment comprises a second supply channel disposed within the body adjacent the second side edge and extending in the axial direction from the cavity to adjacent the leading edge or the trailing edge, wherein both the first and second supply channels are disposed at a same axial location relative to the longitudinal axis, and the second supply channel is configured to receive the cooling fluid from the cavity.
13. The hot gas flow path component of any preceding clause, comprising a second channel disposed within the body adjacent the second lateral side and adjacent the trailing edge or the leading edge, wherein the second channel extends across the body in the direction from the first side edge toward the second side edge, and the second channel comprises a third end portion adjacent the first side edge and a fourth end portion adjacent the second side edge, and wherein the second channel is configured to receive the cooling fluid from the cavity to cool the trailing edge or the leading edge via a second intermediate channel extending in the radial direction between the second supply channel and the second channel, and the fourth end portion of the second channel is directly coupled to the second intermediate channel.
14. The hot gas flow path component of any preceding clause, wherein the first and second channels are parallel with respect to each other.
15. A shroud segment for use in a turbine section of a gas turbine engine, comprising:
   a body including a leading edge, a trailing edge, a first side edge, a second side edge, and a pair of opposed lateral sides between the leading and trailing edges and the first and second side edges, wherein a first lateral side of the pair of opposed lateral sides is configured to interface with a cavity having a cooling fluid, and a second lateral side of the pair of opposed lateral sides is oriented toward a hot gas flow path;
   a first supply channel disposed within the body adjacent the first side edge and extending in an axial direction relative to a longitudinal axis of the gas turbine engine from the cavity to adjacent the trailing edge;
   a second supply channel disposed within the body adjacent the second side edge and extending in the axial direction from the cavity to adjacent the trailing edge, wherein the first and second supply channels are configured to receive the cooling fluid from the cavity;
   a first channel disposed within the body adjacent the second lateral side and adjacent the trailing edge, wherein the first channel extends across the body in a direction from the first side edge toward the second side edge, and the first channel comprises a first end portion adjacent the first side edge and a second end portion adjacent the second side edge, and wherein the first channel is configured to receive the cooling fluid from the cavity to cool the trailing edge via a first intermediate channel extending in a radial direction relative to the longitudinal axis between the first supply channel and the first channel, and the first end portion of the first channel is directly coupled to the first intermediate channel; and
   a second channel disposed within the body adjacent the second lateral side and adjacent the trailing edge, wherein the second channel extends across the body in the direction from the first side edge toward the second side edge, and the second channel comprises a third end portion adjacent the first side edge and a fourth end portion adjacent the second side edge, and wherein the second channel is configured to receive the cooling fluid from the cavity to cool the trailing edge via a second intermediate channel extending in the radial direction between the second supply channel and the second channel, and the fourth end portion of the second channel is directly coupled to the second intermediate channel.
16. The shroud segment of any preceding clause, wherein the body has a length from the leading edge to the trailing edge, and the first and second channels are disposed in their entirety within a last quarter of the length.
17. The shroud segment of any preceding clause, wherein the first and seconds channels are parallel with respect to each other.
18. The shroud segment of any preceding clause, wherein the second and third end portions each comprises a cooling fluid outlet to discharge the cooling fluid from the body.
19. A shroud segment for use in a turbine section of a gas turbine engine, comprising:
   a body including a leading edge, a trailing edge, a first side edge, a second side edge, and a pair of opposed lateral sides between the leading and trailing edges and the first and second side edges, wherein a first lateral side of the pair of opposed lateral sides is configured to interface with a cavity having a cooling fluid, and a second lateral side of the pair of opposed lateral sides is oriented toward a hot gas flow path;
   a first supply channel disposed within the body adjacent the first side edge and extending in an axial direction relative to a longitudinal axis of the gas turbine engine from the cavity to adjacent the leading edge;
   a second supply channel disposed within the body adjacent the second side edge and extending in the axial direction from the cavity to adjacent the leading edge, wherein the first and second supply channels are configured to receive the cooling fluid from the cavity;
   a first channel disposed within the body adjacent the second lateral side and adjacent the leading edge, wherein the first channel extends across the body in a direction from the first side edge toward the second side edge, and the first channel comprises a first end portion adjacent the first side edge and a second end portion adjacent the second side edge, and wherein the first channel is configured to receive the cooling fluid from the cavity to cool the leading edge via a first intermediate channel extending in a radial direction relative to the longitudinal axis between the first supply channel and the first channel, and the first end portion of the first channel is directly coupled to the first intermediate channel; and
   a second channel disposed within the body adjacent the second lateral side and adjacent the leading edge, wherein the second channel extends across the body in the direction from the first side edge toward the second side edge, and the second channel comprises a third end portion adjacent the first side edge and a fourth end portion adjacent the second side edge, and wherein the second channel is configured to receive the cooling fluid from the cavity to cool the leading edge via a second intermediate channel extending in the radial direction between the second supply channel and the second channel, and the fourth end portion of the second channel is directly coupled to the second intermediate channel.
20. The shroud segment of any preceding clause, wherein the body has a length from the leading edge to the trailing edge, and the first and second channels are disposed in their entirety within a first quarter of the length.

## Claims

1. A hot gas flow path component (40) for use in a turbine section (18) of a gas turbine engine (10), comprising:
a body (42) including a leading edge (44), a trailing edge (44), a first side edge (48), a second side edge (50), and a pair of opposed lateral sides (52, 54) between the leading (44) and trailing edges (46) and the first and second side edges (48, 50), wherein a first lateral side (52) of the pair of opposed lateral sides (52, 54) is configured to interface with a cavity (56) having a cooling fluid, and a second lateral side (54) of the pair of opposed lateral sides (52, 54) is oriented toward a hot gas flow path;
a first supply channel (90) disposed within the body (42) and extending in an axial direction relative to a longitudinal axis (80) of the gas turbine engine (10) from the cavity (56) to adjacent the leading edge (44) or the trailing edge (46), wherein the first supply channel (90) is configured to receive the cooling fluid from the cavity (56); and
a first channel (74) disposed within the body (42) adjacent the second lateral side (54) and adjacent the trailing edge (46) or the leading edge (44), wherein the first channel (74) extends across the body (42) in a direction from the first side edge (48) toward the second side edge (50), and the first channel (74) comprises a first end portion (82) adjacent the first side edge (48) and a second end portion (84) adjacent the second side edge (50), and wherein the first channel (74) is configured to receive the cooling fluid from the cavity (56) to cool the trailing edge (46) or the leading edge (44) via a first intermediate channel (114) extending in a radial direction relative to the longitudinal axis (80) between the first supply channel (90) and the first channel (74).

2. The hot gas flow path component (40) of claim 1, wherein the first supply channel (90) extends in the axial direction from the cavity (56) to adjacent the leading edge (44), and the first channel (74) is disposed adjacent the leading edge (44).

3. The hot gas flow path component (40) of claim 1 or claim 2, wherein the first supply channel (90) extends in the axial direction from the cavity (56) to adjacent the trailing edge (46), and the first channel (90) is disposed adjacent the trailing edge (46).

4. The hot gas flow path component (40) of any preceding claim, wherein the second end portion (84) comprises a cooling fluid outlet (96) to discharge the cooling fluid from the body (42).

5. The hot gas flow path component (40) of any preceding claim, wherein the second end portion (84) extends to the second side edge (50) and the cooling fluid outlet is disposed on the second side edge (50) to discharge the cooling fluid from the body (42).

6. The hot gas flow path component of any preceding claim, wherein the second end portion (84) extends to the second lateral side (54) and the cooling fluid outlet (96) is disposed on the second lateral side (54) to discharge the cooling fluid from the body (42).

7. The hot gas flow path component (40) of any preceding claim, wherein the second end portion (84) extends to the trailing edge (46) or the leading edge (44) and the cooling fluid outlet is disposed on the trailing edge or the leading edge to discharge the cooling fluid from the body.

8. The hot gas flow path component (40) of any preceding claim, wherein the first end portion (82) is coupled to the first intermediate channel (114).

9. The hot gas flow path component (40) of any preceding claim, wherein the first end portion (82) comprises a hooked shape (97) having a free end (99), and the first intermediate channel (114) is coupled to the free end (99).

10. The hot gas flow path component (40) of any preceding claim, comprising a second channel (74) disposed within the body (42) adjacent the second lateral side (54) and adjacent the trailing edge (46) or the leading edge (44), wherein the second channel (74) extends across the body (42) in the direction from the first side edge (48) toward the second side edge (50), and the second channel (74) comprises a third end portion (84) adjacent the first side edge (48) and a fourth end portion (82) adjacent the second side edge (50), and wherein the second channel (74) is configured to receive the cooling fluid from the cavity (56) to cool the trailing edge (46) or the leading edge (44) via a second intermediate channel (114) extending in the radial direction relative to the longitudinal axis (80) between the first supply channel (90) and the second channel (74).

11. The hot gas flow path component (40) of any preceding claim, wherein a radial cross-section area of the first supply channel (90) can decrease in the axial direction from the cavity (56) to adjacent to the leading edge (44) or the trailing edge (46).

12. The hot gas flow path component (40) of any preceding claim, wherein the first supply channel (90) is disposed adjacent the first side edge (48), the first end portion (82) of the first channel (74) is directly coupled to the first intermediate channel (114), and the shroud segment (40) comprises a second supply channel (90) disposed within the body (42) adjacent the second side edge (50) and extending in the axial direction from the cavity (56) to adjacent the leading edge (44) or the trailing edge (46), wherein both the first and second supply channels (90) are disposed at a same axial location relative to the longitudinal axis (80), and the second supply channel (90) is configured to receive the cooling fluid from the cavity (56).

13. The hot gas flow path component (40) of any preceding claim, comprising a second channel (74) disposed within the body (42) adjacent the second lateral side (54) and adjacent the trailing edge (46) or the leading edge (44), wherein the second channel (74) extends across the body (42) in the direction from the first side edge (48) toward the second side edge (50), and the second channel (74) comprises a third end portion (82) adjacent the first side edge (48) and a fourth end portion (84) adjacent the second side edge (50), and wherein the second channel (74) is configured to receive the cooling fluid from the cavity (56) to cool the trailing edge (46) or the leading edge (44) via a second intermediate channel (114) extending in the radial direction between the second supply channel (90) and the second channel (74), and the fourth end portion (84) of the second channel (74) is directly coupled to the second intermediate channel (114).

14. The hot gas flow path component (40) of any preceding claim, wherein the first and second channels (74) are parallel with respect to each other.

15. A shroud segment (40) for use in a turbine section (18) of a gas turbine engine (10), comprising:
a body (42) including a leading edge (44), a trailing edge (46), a first side edge (48), a second side edge (50), and a pair of opposed lateral sides (52, 54) between the leading (44) and trailing edges (46) and the first (48) and second (50) side edges, wherein a first lateral side (52) of the pair of opposed lateral sides (52, 54) is configured to interface with a cavity (56) having a cooling fluid, and a second lateral side (54) of the pair of opposed lateral sides (52, 54) is oriented toward a hot gas flow path;
a first supply channel (90) disposed within the body (42) adjacent the first side edge (48) and extending in an axial direction relative to a longitudinal axis (80) of the gas turbine engine (10) from the cavity (56) to adjacent the trailing edge (46);
a second supply channel (90) disposed within the body (42) adjacent the second side edge (50) and extending in the axial direction from the cavity (56) to adjacent the trailing edge (46), wherein the first and second supply channels (90) are configured to receive the cooling fluid from the cavity (56);
a first channel (74) disposed within the body (42) adjacent the second lateral side (54) and adjacent the trailing edge (46), wherein the first channel (74) extends across the body (42)in a direction from the first side edge (48) toward the second side edge (50), and the first channel (74) comprises a first end portion (82) adjacent the first side edge (48) and a second end portion (84) adjacent the second side edge (50), and wherein the first channel (74) is configured to receive the cooling fluid from the cavity (56) to cool the trailing edge (46) via a first intermediate channel (114) extending in a radial direction relative to the longitudinal axis (80) between the first supply channel (90) and the first channel (74), and the first end portion (82) of the second channel (74) is directly coupled to the first intermediate channel (114); and
a second channel (74) disposed within the body (42) adjacent the second lateral side (54) and adjacent the trailing edge (46), wherein the second channel (74) extends across the body (42) in the direction from the first side edge (48) toward the second side edge (50), and the second channel (74) comprises a third end portion (82) adjacent the first side edge (48) and a fourth end portion (84) adjacent the second side edge (50), and wherein the second channel (74) is configured to receive the cooling fluid from the cavity (56) to cool the trailing edge (46) via a second intermediate channel (114) extending in the radial direction between the second supply channel (90) and the second channel (74), and the fourth end portion (84) of the second channel (74) is directly coupled to the second intermediate channel (114).
